# EUROPÄISCHE PATENTANMELDUNG

(11) **EP 2 848 348 A2**
(43) Veröffentlichungstag der Anmeldung: **18.03.2015**
(21) Anmeldenummer: 14171288.5
(22) Anmeldetag: 05.06.2014
(51) Int. Cl.: B23F 15/00, B23F 5/04, B23F 23/12

(54) **Verfahren zur Herstellung eines Abrichtwerkzeuges, Abrichtwerkzeug und Verfahren zum Abrichten einer Schleifschnecke**

(30) Priorität: 13.09.2013 DE 102013015232
(71) Anmelder: Liebherr-Verzahntechnik GmbH, 87437 Kempten (DE)
(72) Erfinder: Kiechle, Roland, Dipl.-Tech.Math.Univ., 87499 Wildpoldsried (DE); Zankl, Manfred, 87634 Obergünzburg (DE); Rösch, Bernd, Dipl.-Ing., 87452 Altusried (DE); Fendt, Barbara, 87647 Oberthingau (DE)
(74) Vertreter: Laufhütte, Dieter

(57) **Zusammenfassung**

Die Erfindung betrifft ein Verfahren zur Herstellung eines Abrichtwerkzeuges zum Abrichten einer mindestens zweigängigen Schleifschnecke, wobei die Berührlinie des Abrichtwerkzeuges mit der abzurichtenden Schleifschnecke berechnet wird und das Abrichtwerkzeug mit einem hohlballigen Profil versehen wird. Erfindungsgemäß ist vorgesehen, dass die Dimensionierung der Hohlballigkeit in Abhängigkeit der berechneten Berührlinie bestimmt wird.

## Beschreibung

Die Erfindung betrifft ein Verfahren zur Herstellung eines Abrichtwerkzeuges, das zum Abrichten einer mindestens zweigängigen Schleifschnecke geeignet ist sowie ein derartiges Abrichtwerkzeug. Darüber hinaus betrifft die Erfindung ein Verfahren zum Abrichten einer mindestens zweigängigen Schleifschnecke zum kontinuierlichen Wälzschleifen.

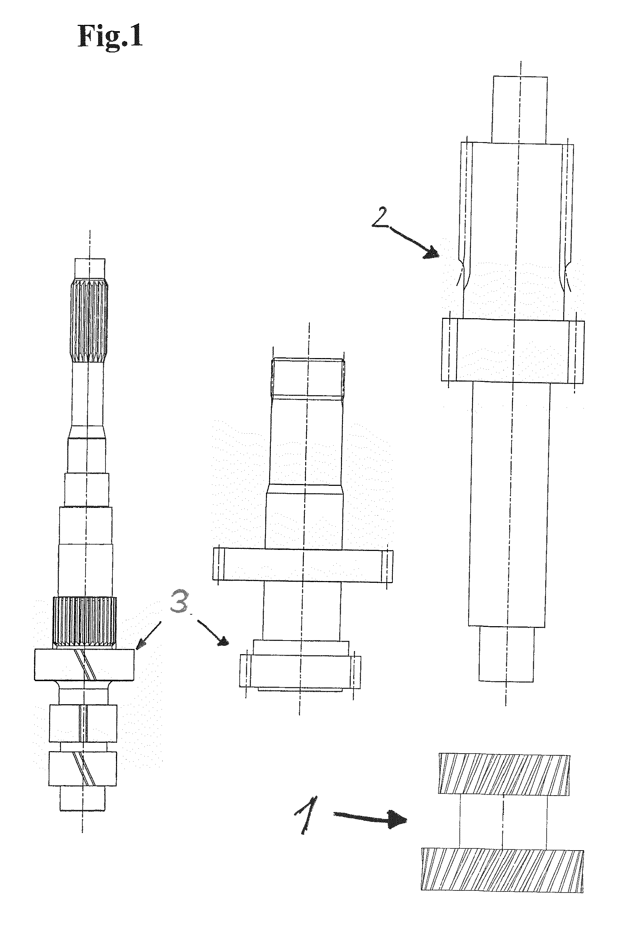

Kollisionsverzahnungen werden heute mit CBN-Profilschleifscheiben bearbeitet, da kein bzw. nur ein eingeschränkter Werkzeugüberlauf aufgrund der vorhandenen Störkonturen möglich ist. Beispiele von Werkstücken mit Störkonturen sind der Figur 1 zu entnehmen. So können sich Störkonturen aufgrund von Doppelverzahnungen 10 ergeben, da durch den geringen Abstand zwischen den Verzahnungen nur ein begrenzter Werkzeugüberlauf möglich ist und die Verzahnbearbeitung nur mit einem Werkzeug mit begrenztem Durchmesser erfolgen kann.

Störkonturen können aber auch durch einen benachbarten Bund, Radius oder eine andere Bauteilkontur 3 vorgegeben sein, die wiederum Einfluss auf den maximal möglichen Werkzeugdurchmesser haben. Weiterhin kann die Störkontur auch innerhalb der Verzahnung liegen, wenn z.B. mit einem kleinen Wälzfräser die Verzahnung vorgefräst wurde und innerhalb einer Welle endet, wie dies beispielsweise bei sogenannten Auslaufverzahnungen 2 der Fall ist. Auch dann ist der maximale Durchmesser des Werkzeuges begrenzt.

Bisher wurden kollisionsbehaftete Verzahnungen mit sehr kleinen CBN-Profilschleifscheiben geschliffen, da diese eine geringere Kollisionsgefahr mit der angrenzenden Störkontur bieten. Nachteilig am Profilschleifverfahren ist jedoch die verfahrensbedingt hohe Schleifzeit pro Werkstück. Aus diesem Grund sucht man Lösungen für effizientere Bearbeitungsverfahren von kollisionsbehafteten Werkstücken, beispielsweise durch kontinuierliches Wälzschleifen mit Hilfe einer Schleifschnecke. Aufgrund der vorgegebenen Störkonturen darf die verwendete Schleifschnecke nur einen begrenzten Durchmesser aufweisen, der bei kollisionsbehafteten Verfahren oftmals weniger als 150mm bzw. 120mm betragen darf.

Im Normalschnitt lässt sich das Schleifschneckenprofil als trapezförmiges Zahnstangenprofil beschreiben. Modifikationen des Zahnkopfes bzw. Zahnfußes einer Verzahnung am Werkstück werden durch Abweichungen an der Schleifschnecke vom trapezförmigen Zahnstangenprofil erreicht. Soll die Verzahnung zudem eine Profilwelligkeit (Balligkeit) erhalten, wird der Bereich der Schleifschnecke zwischen Zahnkopf und Zahnfuß mit einer Hohlwelligkeit versehen.

Bei Serienfertigungen müssen die eingesetzten Schleifschnecken zudem in bestimmten Intervallen abgerichtet werden, um die gewünschte Profilform und Schittfreudigkeit zu wahren. Hierzu werden Diamantrollen als Abrichtwerkzeug eingesetzt und das Profil des Abrichters wird im Bereich der Berührlinie auf die Schleifschnecke übertragen. Die Berührung zwischen Schleifschnecke und Abrichter erfolgt dabei aber nicht in der Normalschnittebene, sondern unter einem bestimmten Winkel der von vielen Faktoren, wie beispielsweise dem Schrägungswinkel der Schleifschnecke, deren Gangzahl und deren Schneckendurchmesser bestimmt wird.

Der Abrichter hat bei großen Schleifschneckendurchmessern das Profil, welches am Werkstück erzeugt werden soll. Es findet quasi eine 1:1-Übertragung des Abrichterprofils auf die Schleifschnecke statt. Aufgrund des Schrägungswinkels und der damit verbundenen Abweichung gegenüber der Normalschnittebene kommt es jedoch bei der Übertragung des Abrichterprofils auf die Schleifschnecke zu Verschneidungen zwischen dem Abrichterprofil und dem Schneckenprofil.

Bei großen Schleifschnecken und Abrichterdurchmessern hält sich das Ausmaß der erzeugten Verschneidungen jedoch in Grenzen, sodass diese unberücksichtigt bleiben können. Anders verhält sich dies bei kleinen Schneckendurchmessern. Hier werden aufgrund der Eingriffsverhältnisse zwischen der Abrichtscheibe und der Schnecke die Verschneidungen am Profil der Schleifschnecke so groß, dass diese sich deutlich auf dem bearbeiteten Werkstück niederschlagen und damit zu fehlerhaften Verzahnungen führen können. Insbesondere erzeugen diese Verschneidungen auf dem Schneckenprofil eine zunehmende Hohlballigkeit, die sich als unerwünschte Balligkeit auf der geschliffenen Verzahnung zeigt.

Die Aufgabe der Erfindung besteht nun darin, den Verschnitt auf der Flanke der Schleifschnecke beim Abrichten zu minimieren und ein Verfahren zum Wälzschleifen störkonturbehafteter Werkstücke zu optimieren. Insbesondere wird nach einem Abrichtwerkzeug gesucht, das die vorgenannten Verschneidungen auf dem Flankenprofil einer Schleifschnecke zu minimieren weiß.

Diese Aufgabe wird durch ein Verfahren zur Herstellung eines Abrichtwerkzeuges gemäß den Merkmalen des Anspruchs 1 gelöst. Vorteilhafte Ausgestaltungen des Verfahrens sind Gegenstand der abhängigen Ansprüche 2 bis 5.

Der Kerngedanke der Erfindung besteht nun darin, die bisher entstehenden Verschneidungen beim Abrichten einer mehrgängigen Schleifschnecke vorherzusehen und durch entsprechende Modifikation am Abrichtwerkzeug diese Verschneidungen zu kompensieren. Die Schleifschnecke dient insbesondere zum kontinuierlichen Wälzschleifen von Verzahnungen mit Störkontur. Denkbar ist es, dass die Schleifschnecke zum axialen- oder/und diagonalen Wälzschleifen geeignet ist. Die Verzahnung am Werkstück soll dabei bevorzugt eine Profilwelligkeit/Balligkeit erhalten. Um Abweichungen von der gewünschten Flankenform des Werkstückes, bevorzugt Balligkeit, zu vermeiden, wird nach dem erfindungsgemäßen Verfahren ein geeignetes Abrichtwerkzeug erstellt.

Bei dem erfindungsgemäßen Verfahren zur Herstellung eines Abrichtwerkzeuges ist nun vorgesehen, dass die Berührlinie des Abrichtwerkzeuges mit der abzurichtenden mehrgängigen Schleifschnecke berechnet wird. Diese Berührlinie weicht aufgrund der Schrägstellung des Abrichtwerkzeuges gegenüber der Normalschnittebene ab. Die Berührlinie kann mit Hilfe ihrer Steigungshöhe, d.h. der Abweichung gegenüber der Normalschnittebene, beschrieben werden.

Erfindungsgemäß wird das Abrichtwerkzeug nun mit einem hohlballigen Profil versehen, wobei die Größe der Hohlballigkeit in Abhängigkeit der berechneten Berührlinie bestimmt wird. Durch die Hohlballigkeit des Abrichtwerkzeugs kann der unerwünschten Hohlballigkeit des Schleifschneckenprofils aktiv entgegengewirkt werden. Die Größe der Hohlballigkeit ist in Abhängigkeit der tatsächlichen Berührlinie zwischen Abrichtwerkzeug und Schleifschnecke, d.h. in Abhängigkeit gewisser Faktoren des Schleifwerkzeuges zu bestimmen. Bisher wurden Abrichtwerkzeuge nur in Abhängigkeit der gewünschten Verzahnung des Werkstückes erstellt.

Je höher die Steigungshöhe der Berührlinie, d.h. die Abweichung gegenüber der Normalschnittebene ist, desto stärker sind die resultierenden Verschneidungen am Profil der Schleifschnecke nach dem Abrichten. Die resultierende Steigungshöhe der Berührlinie hängt vom Durchmesser der abzurichtenden mehrgängigen Schleifschnecke ab. Insbesondere treten nicht zu vernachlässigende Verschneidungen dann auf, wenn der Durchmesser der Schleifschnecke einen Durchmesser von kleiner oder gleich 120mm, besonders bevorzugt kleiner oder gleich 100mm aufweist.

Einen Einfluss auf die Steigungshöhe der Berührlinie hat ebenfalls das Verhältnis zwischen Schleifschneckendurchmesser und Modul der Verzahnung. Wird dieses Verhältnis kleiner oder gleich 45, so kommt es zu deutlichen Verschneidungen auf der Schleifflanke der Schleifschnecke.

Darüber hinaus existiert ein weiterer Einfluss auf die Steigungshöhe. Je größer das Modul der Schleifschnecke, also je größer der Abstand zwischen Kopfkreisdurchmesser und Fußkreisdurchmesser der Schleifschnecke ist, umso stärker nimmt die Steigungshöhe der Berührlinie zu. Dies gilt insbesondere für ein Modul von mindestens 2,5.

Bei dem erfindungsgemäßen Verfahren ist es daher zweckmäßig, für die Berechnung der Berührlinie die Gangzahl der Schleifschnecke und/oder deren Schneckendurchmesser zu berücksichtigen.

Weiterhin vorteilhafterweise wird für die Berechnung der Berührlinie das Modul der abzurichtenden Schleifschnecke berücksichtigt. Unter Verwendung dieser schleifschneckenabhängigen Parameter kann eine exakte Berechnung der tatsächlichen Berührlinie zwischen Abrichtwerkzeug und Schleifschnecke erfolgen. Ist diese Berührlinie bekannt, kann das Abrichtwerkzeug passend mit einer Hohlballigkeit versehen werden, die den Verschneidungen auf der Flankenseite der Schleifschnecke entgegenwirkt und eine unerwünschte Hohlballigkeit auf der Schleifschnecke reduziert.

Insbesondere wird die Hohlballigkeit des Abrichtwerkzeuges vergrößert, sofern die Schleifschnecke ein steigendes Modul und/oder eine steigende Gangzahl und/oder einen abnehmenden Schneckendurchmesser aufweist.

Neben dem Verfahren zum Herstellen eines Abrichtwerkzeuges betrifft die Erfindung des Weiteren ein Abrichtwerkzeug zum Abrichten einer mindestens zweigängigen Schleifschnecke zum kontinuierlichen Wälzschleifen, insbesondere zum kontinuierlichen Wälzschleifen kollisionbehafteter Werkstücke. Denkbar ist es, dass die Schleifschnecke zum axialen- oder/und diagonalen Wälzschleifen geeignet ist. Die Verzahnung am Werkstück soll dabei bevorzugt eine Profilwelligkeit/Balligkeit erhalten. Um Abweichungen von der gewünschten Flankenform des Werkstückes, bevorzugt Balligkeit, zu vermeiden, wird ein geeignetes Abrichtwerkzeug zum Abrichten der Schleifschnecke verwendet.

Erfindungsgemäß weist das Abrichtwerkzeug ein hohlballiges Flankenprofil auf, durch das sich auftretende Verschneidungen beim Abrichten bestimmter Schleifschnecken minimieren lassen. Die Vorteile und Eigenschaften des erfindungsgemäßen Abrichtwerkzeuges entsprechen offensichtlich denen des erfindungsgemäßen Verfahrens.

Das Abrichtwerkzeug kann vorzugsweise eine Diamantrolle mit hohlballigem Flankenprofil sein.

Insbesondere ist mit dem Abrichtwerkzeug eine Schleifschnecke abrichtbar, deren Durchmesser kleiner oder gleich 120mm, und besonders bevorzugt kleiner oder gleich 100mm ist. Denkbar ist es auch, dass das Abrichtwerkzeug zum Abrichten einer Schleifschnecke geeignet ist, die ein Verhältnis zwischen Schleifschneckendurchmesser und Modul der Verzahnung von kleiner oder gleich 45 aufweist. Weiterhin ist das Abrichtwerkzeug zum Abrichten einer Schleifschnecke mit einem Modul größer 2,5 geeignet.

Das Abrichtwerkzeug wird idealerweise gemäß dem erfindungsgemäßen Verfahren bzw. einer vorteilhaften Ausgestaltung des Verfahrens hergestellt.

Neben dem Verfahren zur Herstellung eines Abrichtwerkzeuges betrifft die Erfindung zusätzlich einen Datenträger, der eine entsprechende Steuerungssoftware zum Ausführen des erfindungsgemäßen Verfahrens zur Herstellung eines Abrichtwerkzeuges beinhaltet.

Zudem betrifft die vorliegende Erfindung ein Verfahren zum Abrichten einer mindestens zweigängigen Schleifschnecke zum kontinuierlichen Wälzschleifen, insbesondere zum kontinuierlichen Wälzschleifen kollisionsbehafteter Werkstücke. Denkbar ist es, dass die Schleifschnecke zum axialen- oder/und diagonalen Wälzschleifen geeignet ist. Die Verzahnung am Werkstück soll dabei bevorzugt eine Profilwelligkeit/Balligkeit erhalten. Um Abweichungen von der gewünschten Flankenform des Werkstückes, bevorzugt Balligkeit, zu vermeiden, wird die Schleifschnecke gemäß dem erfindungsgemäßen Verfahren abgerichtet.

Erfindungsgemäß ist auch hier vorgesehen, dass die mehrgängige Schleifschnecke mit wenigstens einem hohlballigen Abrichtwerkzeug abgerichtet wird. Das hohlballige Abrichtwerkzeug kann vorzugsweise gemäß dem erfindungsgemäßen Abrichtwerkzeug bzw. einer vorteilhaften Ausgestaltung des erfindungsgemäßen Abrichtwerkzeuges ausgeführt sein. Damit weist das erfindungsgemäße Verfahren zum Abrichten einer Schleifschnecke offensichtlich dieselben Vorteile und Eigenschaften wie der erfindungsgemäße Abrichter auf.

Das Verfahren dient insbesondere zum Abrichten einer Schleifschnecke, die einen Durchmesser kleiner oder gleich 120mm, besonders bevorzugt kleiner oder gleich 100mm aufweist. Alternativ oder zusätzlich kann die Schleifschnecke ein Verhältnis zwischen Schleifschneckendurchmesser und Modul der Verzahnung von kleiner oder gleich 45 aufweisen. Alternativ oder zusätzlich kann die Schleifschnecke ein Modul größer oder gleich 2,5 aufweisen. Derartig dimensionierte Schleifschnecken sind insbesondere zum kontinuierlichen Wälzschleifen kollisionsbehafteter Werkstücke notwendig.

Für den Abrichtvorgang kann es zweckmäßig sein, das Abrichtwerkzeug gegenüber der Schleifschnecke zu verschwenken, um dieses schräg in die Lücke der Schleifschnecke einzustellen. Hierdurch lässt sich eine zusätzliche Modifikation der Schleifschnecke während des Abrichtvorgangs erreichen. Insbesondere wird die Schwenkbewegung des Abrichtwerkzeuges durch eine Verfahrbewegung der Schwenkachse der Werkzeugaufnahme erreicht, insbesondere durch eine Schwenkbewegung der als A-Achse bezeichneten CNC-Achse einer Verzahnmaschine.

Zusätzlich oder alternativ kann eine Zustellbewegung des Abrichters in Radialrichtung erfolgen. Insbesondere derart, sodass die Schleifschnecke von dem Abrichtwerkzeug wegbewegt wird. Eine entsprechende Zustellbewegung kann durch Betätigung der linearen X-Achse einer CNC-Verzahnungsschleifmaschine erreicht werden. Die Stärke des Abrichtwerkzeuges nimmt in Radialrichtung ab. Durch eine Zustellbewegung der Abrichtscheibe bzw. des Schleifschneckenwerkzeuges, sodass diese in relativer Richtung voneinander entfernt werden, nimmt der Einfluss der dicker werdenden Abrichtscheibe ab.

Das Abrichtverfahren der Schleifschnecke kann zweiflankig oder einflankig erfolgen. Wird nur einflankig abgerichtet, kann zusätzlich noch eine Shift- und Rotationsbewegung der Schleifschnecke durchgeführt werden, um das Zahnweitenmaß der Schleifschnecke zu modifizieren. Dies erfolgt üblicherweise durch eine Bewegung der V- und oder B-Achse einer CNC-Verzahnungsmaschine. Hierdurch lässt sich die Nutzhöhe der Schnecke mit einem Abrichter vergrößern, ohne dass ein zweiter Abrichter notwendig wird. Zusätzlich kann noch über eine Steigungskorrektur bei kleiner werdendem Schneckendurchmesser der Profilwinkel am geschliffenen Werkstück korrigiert werden. Mit abnehmendem Durchmesser ändert sich ansonsten der Profilwinkel am geschliffenen Zahnrad.

Bei einer Schleifschnecke mit extrem geringem Durchmesser kann der Einsatz von wenigstens zwei Abrichterkonturen notwendig sein. Dies trifft insbesondere auf Schleifschnecken mit einem Durchmesser zwischen 80mm und 60mm zu. Hierbei wird ein erster Abrichter eingesetzt, der beispielsweise den Schleifschneckendurchmesser im Bereich von 80 bis 76mm abrichtet, wohingegen ein zweiter Abrichter zum Abrichten des übrigen Durchmesserbereiches verwendet wird. Die zur Anwendung kommenden Abrichtwerkzeuge können beispielsweise unterschiedliche Flankenprofile, insbesondere unterschiedliche Hohlballigkeiten aufweisen.

Zuletzt betrifft die Erfindung ein Verfahren zum kontinuierlichen Wälzschleifen von störkonturbehafteten Werkstücken mit einer mindestens zweigängigen Schleifschnecke. Bevorzugt sollen die Werkstücke mit einer definierten Balligkeit am Flankenprofil versehen werden. Erfindungsgemäß wird die Schleifschnecke zwischen einzelnen Werkstücken gemäß dem vorgenannten erfindungsgemäßen Verfahren zum Abrichten einer Schleifschnecke abgerichtet.

Weitere Vorteile und Eigenschaften der Erfindung sollen im Folgenden anhand der Figurendarstellungen näher erläutert werden.

Es zeigen:
- Figur 1:: diverse Verzahnungen mit Störkonturen,
- Figur 2:: eine schematische Darstellung eines kontinuierlichen Wälzschleifvorgangs mit Hilfe einer Schleifschnecke an einem störkonturbehafteten Werkstück und
- Figur 3:: eine Gegenüberdarstellung eines Standardabrichters mit dem erfindungsgemäßen Abrichtwerkzeug.

Die in Figur 1 dargestellten Werkstücke mit Störkontur wurden bereits im einleitenden Teil näher beschrieben. Eine wiederholende Beschreibung wird für nicht notwendig erachtet.

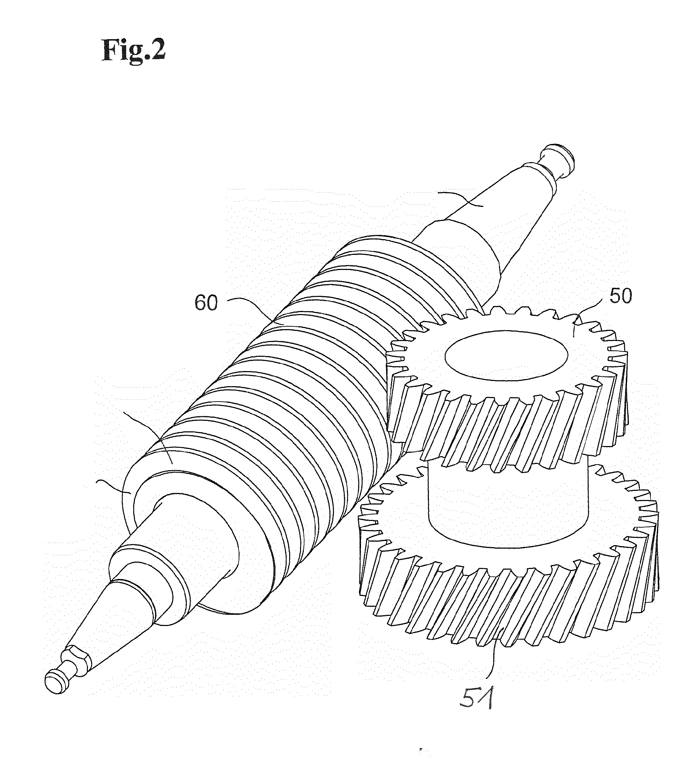

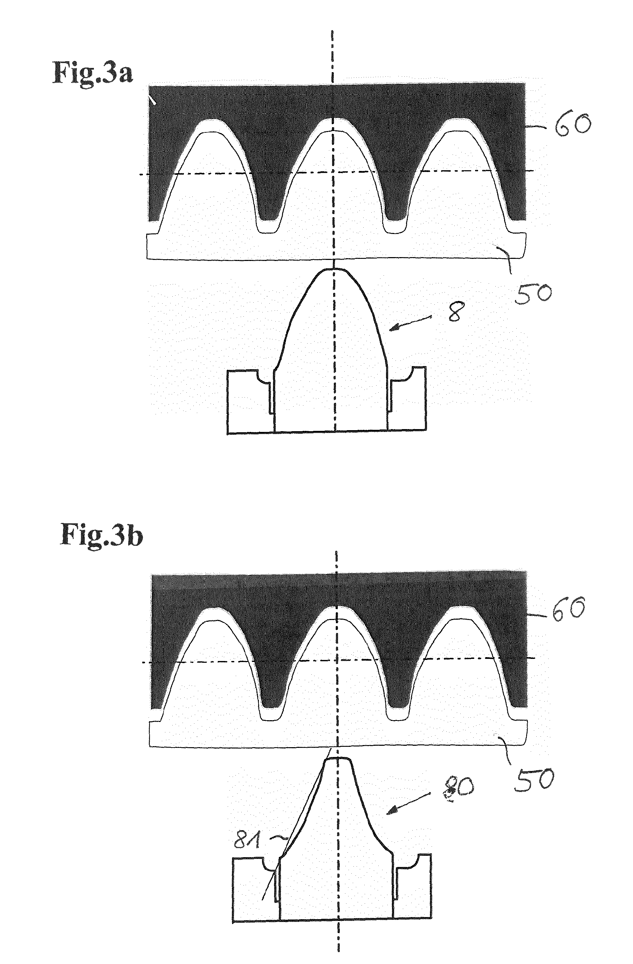

Figur 2 zeigt nunmehr eine skizzierte Darstellung des kontinuierlichen Wälzschleifvorgangs einer Verzahnung 50 mit Störkontur 51. Aufgrund der vorliegenden Kollisionsgefahr mit der Störkontur 51 ist der Werkzeugüberlauf der zylindrischen Schleifschnecke 60 und damit deren Durchmesser begrenzt. Gewisse Werkstücke begrenzen den maximalen Werkzeugdurchmesser auf weniger als 120mm bzw. weniger als 100mm. Die eingesetzte Schleifschnecke 60 ist mehrgängig ausgeführt und muss während der Serienfertigung nach der Fertigstellung mehrerer Werkstücke durch ein passendes Abrichtwerkzeug 80 (siehe Figur 3b) abgerichtet werden. Dazu wird ein Abrichtwerkzeug in Form einer Diamantrolle der jeweiligen Lücke der Schleifschnecke 60 zugeführt.

Die Berührung zwischen Schleifschnecke 60 und Abrichter 80 erfolgt dabei aber nicht in der Normalschnittebene, sondern unter einem Winkel der von vielen Faktoren wie z.B. dem Schrägungswinkel der Schleifschnecke 60, deren Gangzahl und Schneckendurchmesser bestimmt wird.

Bei sehr kleinen Schleifschneckendurchmessern (Ø <120 mm) kommt es auf Grund der Eingriffsverhältnisse zwischen der Abrichtscheibe 80 und der Schnecke 60 zu nicht vernachlässigbaren Verschneidungen im Profil der Schleifschnecke 60, deren Auswirkungen sich deutlich auf dem bearbeiteten Werkstück 50 zeigen und dies damit fehlerhaft werden lassen.

Die Ursache für die Verschneidungen liegt in den Kontaktverhältnissen zwischen der schräg angeordneten Abrichtscheibe 80 und der Schleifschnecke 60. Mit zunehmender Gangzahl der Schnecke 60 und kleiner werdendem Schneckendurchmesser nimmt die Steigungshöhe der Berührlinie zwischen Schnecke 60 und Abrichtwerkzeug 80 zu, was wiederum zu stärkeren Verschneidungen am Profil der Schleifschnecke 60 führt. Die Verschneidung wiederum erzeugt auf dem Schneckenprofil 60 eine Hohlballigkeit, die sich als unerwünschte bzw. zu große Balligkeit auf der geschliffenen Verzahnung 50 zeigt.

Zudem macht sich mit zunehmendem Modul, also je größer der Abstand zwischen Kopfkreisdurchmesser und Fusskreisdurchmesser ist, ebenfalls die Steigungshöhe der Berührlinie stärker bemerkbar.

Die erfindungsgemäße Umsetzung wirkt dem Verschnitt auf der Flanke der Schleifschnecke 60 beim Abrichten aktiv entgegen, um schafft zudem ein Verfahren, mit dem störkonturbehaftetet Werkstücke 50 wirtschaftlich Wälzgeschliffen werden können.

Dazu ist eine exakte Berechnung der Berührline erforderlich um die Größe der Verschneidung zu kennen und entsprechend auf dem Abrichter 80 vorzuhalten. Als Resultat dieser Berechnung entsteht ein hohlballiger Abrichter 80, wobei die Größe der Hohlballigkeit mit steigendem Modul, steigender Gangzahl sowie abnehmendem Schleifschneckendurchmesser betragsmäßig zunimmt.

Die Auslegung des Abrichters 80 ergeht nach folgender Vorgehensweise. Für die kontinuierliche Wälzschleifbearbeitung eines Werkstückes 50 soll eine mehrgängige Schleifschnecke 60 mit möglichst hoher Gangzahl gewählt werden. Durch den mit zunehmender Gängigkeit abnehmenden Steigungswinkel des Werkzeuges wird es möglich, einen möglichst großen Schleifschneckendurchmesser bei vorgegebener Störkontur festzulegen, so dass sich ein möglichst wirtschaftliches Wälzschleifverfahren ergibt. In Kenntnis dieser Daten kann nun über die exakt berechnete Berührlinie das Profil des Abrichters 80 festgelegt werden. Dieser Abrichter 80 ist dann hohlballig, wobei der Betrag von den Faktoren Schneckendurchmesser, Modul und Gangzahl der Schleifschnecke 60 abhängt.

Figur 3 zeigt nun eine Gegenüberstellung von Abrichtwerkzeugen. Figur 3a zeigt eine nach dem Stand der Technik bekannte Abrichtrolle 8, deren Flankenprofil üblicherweise 1:1 auf die Flanken einer Schleifschnecke abgebildet wird.

Figur 3b zeigt nunmehr das erfindungsgemäße hohlballige Abrichterprofil 80. Hierbei ist zur Verdeutlichung eine Gerade 81 eingezeichnet, gegenüber dieser das hohlballige Profil der Abrichterflanken deutlich wird. Der Radius der Hohlballigkeit wird exakt durch die berechnete Berührungslinie des Abrichtwerkzeuges 80 mit der Schleifschnecke 60 bestimmt.

Bei sehr kleinen Schneckendurchmessern kann der Einsatz von zwei Abrichterkonturen notwendig sein, um beispielsweise einen Schneckendurchmesser zwischen 80mm und 60mm abzurichten. Der erste Abrichter bearbeitet dann den Durchmesser von 80 bis 76mm und der zweite übernimmt den Rest.

Zusätzlich kann das übertragende Profil hinsichtlich der Balligkeit und des Profilwinkels beim Übertragen auf die Schleifschnecke 60 noch modifiziert werden, indem durch die Verfahrbewegung der A-Achse einer CNC-Verzahnmaschine die Abrichtscheibe schräg in die Lücke der Schnecke 60 gestellt wird und durch eine Zustellbewegung der X-Achse einer CNC-Verzahnmaschine diese von der Schleifschnecke 60 weggeführt wird, um den Einfluss der dicker werdenden Abrichtscheibe 80 wieder etwas kleiner werden zu lassen.

Wird nur einflankig abgerichtet, so kann zusätzlich noch mit der V- und der B-Achse einer CNC-Verzahnmaschine das Zahnweitenmaß der Schleifschnecke 60 modifiziert werden. Damit kann die Nutzhöhe der Schnecke 60 mit einem Abrichter 80 vergrößert werden, ohne dass ein zweiter Abrichter notwendig wird. Zusätzlich kann noch über eine Steigungskorrektur bei kleiner werdendem Schneckendurchmesser der Profilwinkel am geschliffenen Werkstück 50 korrigiert werden. Mit abnehmendem Durchmesser ändert sich sonst der Profilwinkel am geschliffenen Zahnrad 50.

## Patentansprüche

1. Verfahren zur Herstellung eines Abrichtwerkzeuges zum Abrichten einer mindestens zweigängigen Schleifschnecke zum kontinuierlichen Wälzschleifen, **dadurch gekennzeichnet**, das die Berührlinie des Abrichtwerkzeuges mit der abzurichtenden Schleifschnecke berechnet und das Abrichtwerkzeug mit einem hohlballigen Profil versehen wird, wobei die Dimensionierung der Hohlballigkeit in Abhängigkeit der berechneten Berührlinie erfolgt.

2. Verfahren nach Anspruch 1, **dadurch gekennzeichnet, dass** die Schleifschnecke zum kontinuierlichen Wälzschleifen kollisionsbehafteter Werkstücke dient und einen Durchmesser kleiner oder gleich 120mm, besonders bevorzugt kleiner oder gleich 100mm aufweist und/oder ein Verhältnis zwischen Schleifschneckendurchmesser und Modul der Verzahnung von kleiner oder gleich 45 aufweist und/oder ein Modul von mindestens 2,5 aufweist.

3. Verfahren nach einem der vorhergehenden Ansprüche, **dadurch gekennzeichnet, dass** die Berechnung der Berührlinie in Abhängigkeit der Gangzahl und/oder des Schneckendurchmessers berechnet wird.

4. Verfahren nach einem der vorhergehenden Ansprüche, **dadurch gekennzeichnet, dass** die Berechnung der Berührlinie in Abhängigkeit des Moduls der abzurichtenden Schleifschnecke berechnet wird.

5. Verfahren nach einem der vorhergehenden Ansprüche, **dadurch gekennzeichnet, dass** die Größe der Hohlballigkeit mit steigendem Modul und/oder steigender Gangzahl und/oder abnehmendem Schneckendurchmesser betragsmäßig zunimmt.

6. Abrichtwerkzeug zum Abrichten einer mindestens zweigängigen Schleifschnecke zum kontinuierlichen Wälzschleifen, insbesondere zum kontinuierlichen Wälzschleifen kollisionsbehafteter Werkstücke,
**dadurch gekennzeichnet,**
**dass** das Abrichtwerkzeug ein hohlballiges Flankenprofil aufweist.

7. Abrichtwerkzeug nach Anspruch 6, **dadurch gekennzeichnet, dass** das Abrichtwerkzeug eine Diamantrolle mit hohlballigen Flankenprofil ist und zum ein- und/oder zweiflankigen Abrichten einer Schleifschnecke geeignet ist.

8. Abrichtwerkzeug nach einem der Ansprüche 6 oder 7, **dadurch gekennzeichnet, dass** mit dem Abrichtwerkzeug eine Schleifschnecke abrichtbar ist, deren Durchmesser kleiner oder gleich 120mm, besonders bevorzugt kleiner oder gleich 100mm ist und/oder ein Verhältnis zwischen Schleifschneckendurchmesser und Modul der Verzahnung von kleiner oder gleich 45 aufweist und/oder ein Modul größer 2,5 aufweist.

9. Abrichtwerkzeug nach Anspruch 6 bis 8, **dadurch gekennzeichnet, dass** das Abrichtwerkzeug gemäß dem Verfahren nach einem der Ansprüche 1 bis 5 hergestellt ist.

10. Auf einem Datenträger gespeicherte Steuerungssoftware zur Herstellung eines Abrichtwerkzeuges gemäß dem Verfahren nach einem der Ansprüche 1 bis 5.

11. Verfahren zum Abrichten einer mindestens zweigängigen Schleifschnecke zum kontinuierlichen Wälzschleifen, insbesondere zum kontinuierlichen Wälzschleifen kollisionsbehafteter Werkstücke,
**dadurch gekennzeichnet,**
**dass** die Schleifschnecke mit wenigstens einem hohlballigen Abrichtwerkzeug abgerichtet wird, insbesondere mit wenigstens einem Abrichtwerkzeug gemäß einem der Ansprüche 6 bis 9.

12. Verfahren nach Anspruch 11, **dadurch gekennzeichnet, dass** die Schleifschnecke einen Durchmesser kleiner oder gleich 120mm, besonders bevorzugt kleiner oder gleich 100mm aufweist und/oder ein Verhältnis zwischen Schleifschneckendurchmesser und Modul der Verzahnung von kleiner oder gleich 45 aufweist und/oder ein Modul größer oder gleich 2,5 aufweist.

13. Verfahren nach einem der Ansprüche 11 oder 12, **dadurch gekennzeichnet, dass** das Abrichtwerkzeug relative zur Schleifschnecke verschwenkt wird, um dieses schräg in die Lücke der Schleifschnecke einzustellen und dass vorzugsweise zusätzlich eine Zustellbewegung in Radialrichtung erfolgt, um die Schleifschnecke von dem Abrichtwerkzeug wegzubewegen.

14. Verfahren nach einem der Ansprüche 11 bis 13, **dadurch gekennzeichnet, dass** wenigstens zwei Abrichtwerkzeuge zum Abrichten der Schleifschnecke verwendet werden, wobei die Abrichtwerkzeuge abweichende Abrichterkonturen, insbesondere unterschiedliche Hohlballigkeiten aufweisen und dass vorzugsweise einflankig abgerichtet wird und das Zahnweitenmaß über eine Shiftbewegung und/oder eine Drehbewegung der Schleifschnecke gegenüber dem Abrichtwerkzeug modifiziert wird.

15. Verfahren zum kontinuierlichen Wälzschleifen eines störkonturbehafteten Werkstückes mit einer mindestens zweigängigen Schleifschnecke, **dadurch gekennzeichnet, dass** die Schleifschnecke zwischen einzelnen Werkstücken gemäß dem Verfahren nach einem der Ansprüche 11 bis 14 abgerichtet wird.
